(19)

Europäisches
Patentamt
European
Patent Office
Office européen
des brevets

(11) **EP 1 419 436 B1**

(12) **EUROPEAN PATENT SPECIFICATION**

(45) Date of publication and mention
of the grant of the patent:
**13.10.2010 Bulletin 2010/41**

(21) Application number: **01976117.0**

(22) Date of filing: **20.08.2001**

(51) Int Cl.:
***G06F 9/38*** (2006.01)     ***H04L 9/06*** (2006.01)

(86) International application number:
**PCT/EP2001/009583**

(87) International publication number:
**WO 2003/019357 (06.03.2003 Gazette 2003/10)**

(54) **Apparatus and method for performing a cryptographic algorithm**

Vorrichtung und Verfahren zur Durchführung eines kryptographischen Algorithmus

Appareil et procédé d'exécution d'un algorithme cryptographique

(84) Designated Contracting States:
**AT DE FR GB IT**

(43) Date of publication of application:
**19.05.2004 Bulletin 2004/21**

(73) Proprietor: **Infineon Technologies AG**
**85579 Neubiberg (DE)**

(72) Inventors:
• **VALVERDE, Antonio**
**81737 München (DE)**
• **SEIFERT, Jean-Pierre**
**81669 München (DE)**

(74) Representative: **Zinkler, Franz**
**Schoppe, Zimmermann, Stöckeler & Zinkler**
**Patentanwälte**
**Postfach 246**
**82043 Pullach bei München (DE)**

(56) References cited:
• **SANO, KOIKE, KAWAMURA, SHIBA:
"Performance Evaluation of AES Finalists on the
High-End Smart Card" THIRD AES CANDIDATE
CONFERENCE, [Online] 14 April 2000
(2000-04-14), pages 82-93, XP002191682
Retrieved from the Internet: <URL:http://
citeseer.nj.nec.com/cs> [retrieved on
2002-02-28]**
• **TAKASHI NAKAYAMA ET AL: "A 6.7-MFLPOS
FLOATING-POINT COPROCESSOR WITH
VECTOR/MATRIX INSTRUCTIONS" IEEE
JOURNAL OF SOLID-STATE CIRCUITS, IEEE INC.
NEW YORK, US, vol. 24, no. 5, 1 October 1989
(1989-10-01), pages 1324-1330, XP000066342
ISSN: 0018-9200**

**EP 1 419 436 B1**

**Description**

The present invention relates to cryptographic algorithms and, in particular, to an apparatus and method for efficiently performing the AES algorithm according to Rijndael.

Recently, the Rijndael algorithm has been declared to be the new Advanced Encryption Standard (AES) algorithm. The algorithm is described in federal information standards publication draft Advanced Encryption Standard (AES), National Institute of Standards and Technology (NIST), published 2001. This document can be downloaded using the following link: http://csrc.nist.gov/publications/drafts/dfips-AES.pdf.

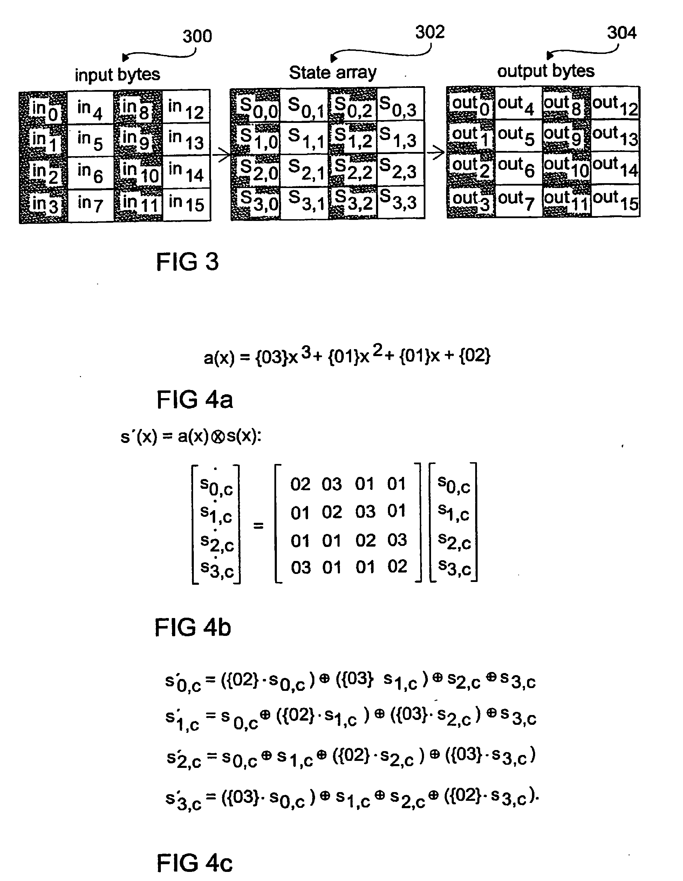

The AES algorithm, which is also called the "Rijndael" algorithm is a symmetric block cypher that processes data in blocks of e.g. 128 bits using cypher keys with lengths of 128, 192 and 256 bits. Additional block sizes are generally possible, but are not adopted in the standard. At the start of the encryption operation, input data to be encrypted are copied to the so-called state array. Reference is made to Fig. 3. The to encrypted data are called input bytes 300. The input bytes represent data to be encrypted and are, as it is shown in Fig. 3, ordered in an array having rows and columns. The input bytes 300 are copied in the state array 302. As it is explained later, the state array is processed using key information in order to generate output bytes 304, which are the encrypted representation of the input bytes.

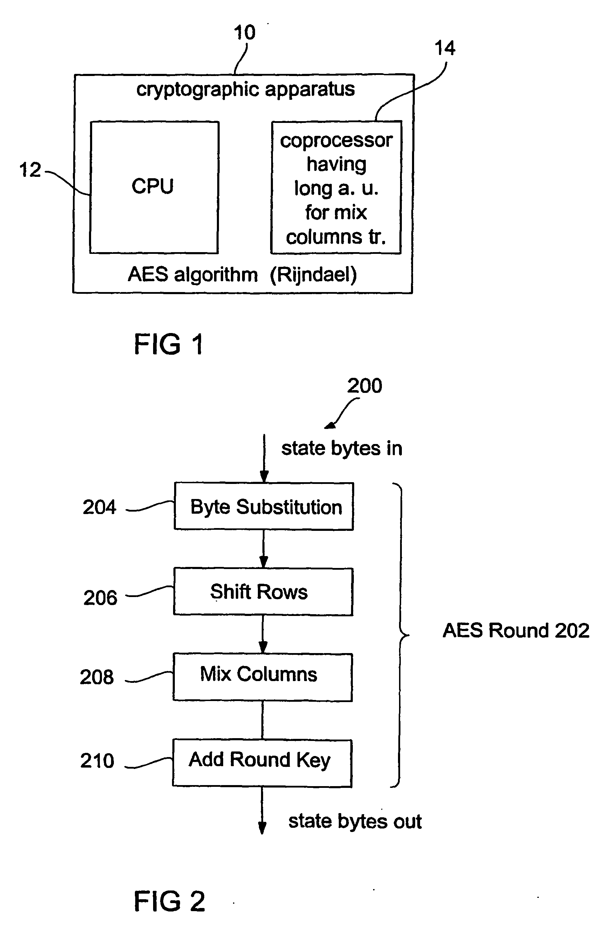

Generally, the AES algorithm is performed in so-called rounds. An AES round is illustrated in Fig. 2. Before the first round starts, there has to be performed a so-called add round key operation, which is described later on. The original state array 302 (Fig. 3) is, therefore, transformed into another state array having a round key added. This state array, which is indicated by 200 in Fig. 2 is processed by means of a so-called AES round 202 which consists of several consecutive transformations. These are the byte substitution 204, the shift rows operation 206, the mixed columns operation 208 and an add round key operation 210. For ease of illustration, also the data between blocks 204 to 210 are termed the state, although it is clear that the state bytes are state data output by, for example, the byte substitution operation 204 are different from the state bytes input into the byte substitution operation.

As specified by the AES standard, a predetermined number of AES rounds is performed, wherein, for each round, another round key is derived from key information. After the specified number of AES rounds is processed, a final AES round consists of a byte substitution operation followed by a shift rows operation which again is followed by a final add round key operation. The output of the final add round key operation are the output bytes 304 illustrated in Fig. 3.

The byte substitution operation shown at 204 in Fig. 2 is a non-linear byte substitution that operates independently on each byte of the state using a substitution table which is also called S-box. This S-box, which is invertible, is constructed by composing two transformations, wherein the first of the two transformations is the multiplicative inverse in the finite field $GF(2^8)$. The other of the two transformations is the affine (over $GF(2)$) transformation. The shift rows transformation 206 is a transformation in which the bytes in the last three rows of the state are cyclically shifted over different numbers of bytes (offsets) wherein the first row, i.e. row 0, is not shifted. The shift value depends on the row number such that bytes in an input row are shifted to lower positions in the row, i.e. lower values of c in a given row, while the "lowest" bytes wrap around into the "top" of the row, i.e. higher values of c in a given row.

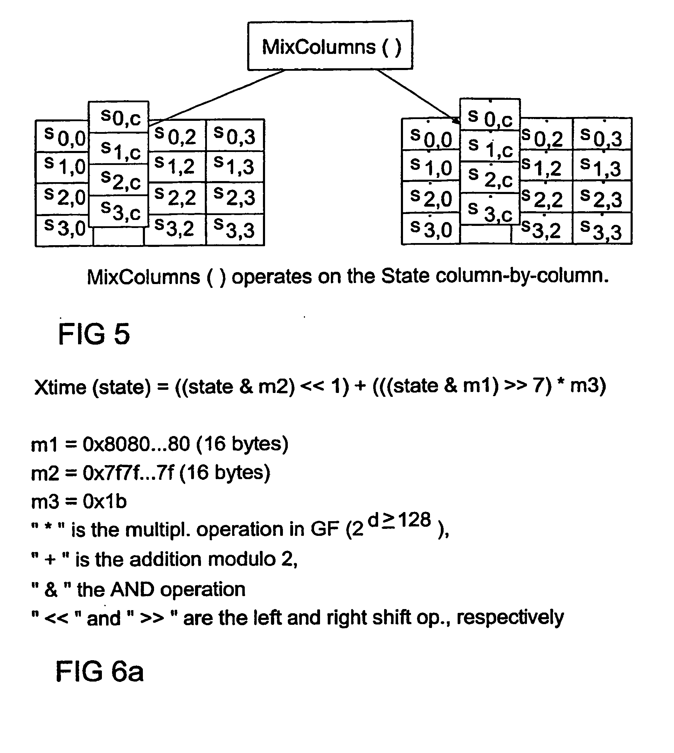

The mixed columns transformation 208 is further illustrated with respect to Figs. 4a, 4b, 4c and 5.

The mixed columns transformation operates on the state column-by-column, treating each column as a four-term polynomial. The columns are considered as polynomials over $GF(2^8)$ and multiplied modulo x:4+1 with a fixed polynomial a(x) which is shown in Fig. 4a. Since the polynomial a(x) is a fixed polynomial, this multiplication modulo x: 4+1 can be written as a matrix multiplication which is illustrated in Fig. 4b. As a result of this multiplication, the four bytes in a column of the state (note that this state consists of the array of bytes output by the preceding shift rows transformation 206 in Fig. 2) are replaced by the following s'$_{ij}$. This is indicated in Fig. 4c. With respect to the notations "01", "02" and "03", it is to be noted that this notation is the usual hexadecimal representation of bit patterns. "00" represents the four bit pattern "0000". "01" represents the four bit pattern "0001". "03" represents the four bit pattern "0010". Since each power of x in Fig. 4a has two such hexadecimal numbers as coefficient, it becomes clear that the coefficients of each power of x consist of 8 bits, i.e. 1 byte, each, which is the reason for considering the columns as several polynomials over $GF(2^8)$.

Fig. 5 illustrates the mix columns transformation to show that from one column of the state, one column of the transformed state is calculated.

With respect to the notation in Fig. 4c, it has to be remarked that the multiplication symbol indicates a multiplication in $GF(2^8)$, which corresponds with the multiplication of polynomials modulo an irreducible polynomial of a degree of 8. The addition of two elements in the finite field is achieved by "adding" the coefficients for the corresponding powers in the polynomials for the two elements. The addition is performed with the XOR operation (denoted by the circled plus sign), i.e. modulo 2, so that 1 + 1 = 0, 1 + 0 = 1 and 0 + 0 = 0. Consequently, the subtraction of polynomials is identical to the addition of polynomials.

SANO, KOIKE, KAWAMURA, SHIBA, in "Performance Evaluation of AES Finalists on the High-End Smart Card"; THIRD AES CANDIDATE CONFERENCE; 14 April 2000 (2000-04-14); pages 82-93; XP002191682 disclose an implementation of the mixed column transformations of the AES algorithm on a 8-bit CPU, without mentioning coprocessors.

TAKASHI NAKAYAMA ET AL, in "A 6.7-MFLPOS FLOATING-POINT COPROCESSOR WITH VECTOR/MATRIX INSTRUCTIONS"; IEEE JOURNAL OF SOLID-STATE CIRCUITS, IEEE INC.; NEW YORK, US; vol. 24, no. 5; 1 October 1989 (1989-10-01); pages 1324-1330; XP000066342; ISSN: 0018-9200 disclose the possibility to implement accelerated vector-matrix multiplications with a coprocessor which conducts calculations in parallel, but do not mention the AES algorithm or any other encryption algorithm for that matter.

The add round key transformation 210 (Fig. 2) serves to add a round key to the state by a simple bit-wise XOR operation. Each round key consists of a number of words from a key schedule, the number being equal to the number of bytes of the state. In the encryption algorithm, the initial round key addition occurs prior to the application of the first AES round.

The AES algorithm, which is a symmetric encryption algorithm takes the key for encryption, i.e. the cypher key, and performs a key expansion routine to generate the key schedule. The key expansion generates a certain amount of words. The algorithm requires an initial set of words, and each of the rounds requires another number of words of key data. The resulting key schedule consists of a linear array of 4-byte words.

The AES decryption algorithm, i.e. the inverse cypher, works in a reverse order. The individual transformation used in the inverse cyphers are inverse shift rows, inverse byte substitution, inverse mix columns and add round key. These individual transformations process the state and are performed as described in the AES standard draft cited above.

The AES algorithm has been designed to be fully compatible with an 8-bit CPU. The operations occurring in the AES algorithms are operations defined in the finite field $GF(2^8)$. Therefore, these operations are suitable for standard 8-bit micro-controllers. When, for example, Fig. 4c is considered, an 8-bit CPU would perform, for example, the multiplications in the first row of Fig. 4c serially and, then, XORing the results of the two multiplications and the remaining state bytes. It has been found out that such an 8-bit implementation needs about 12000 clock cycles to encrypt a 128 bits data block. Additionally, about 48 bytes of a directly addressable internal RAM (RAM = Random Access Memory) are used. It is believed that a decryption algorithm will take about 30% more time than the encryption algorithm and at least the same number of bytes of internal RAM or even more. This is due to the fact that the software implementation of the inverse mix columns transformation for an 8-bit CPU is less efficient than the mix column transformation used for encryption.

When, for example, the AES algorithm has to be performed by a controller on a smart card, the computational power of the smart card is not as excessive as on a personal computer. Additionally, the memory resources are very scarce on the smart card. Performing the AES algorithm using an 8-bit micro-controller on a smart card results, therefore, in long computation times and in the need for memory which. This is not favourable for a customer who has to wait very long for the results of the deciphering operation and which, on the other hand, increases the costs of the smart card because of more required memory cells on the smart card.

It is the object of the present invention to provide an improved concept for performing a cryptographic algorithm having a mix column transformation which is appreciated by the customers and, at the same time, less costly.

This object is achieved by an apparatus for performing a cryptographic algorithm in accordance with claim 1, an apparatus for performing decryption in accordance with claim 16, a method for performing a cryptographic algorithm in accordance with claim 23 and a method for performing decryption in accordance with claim 24.

The present invention is based on the finding that, although the AES algorithm is specially defined for 8-bit CPUs, the mix columns transformation is especially suited for being at least partly performed by a coprocessor having an arithmetic unit arranged for conducting calculations for a number of data units, for example, bits in parallel, the number of data units being equal to or greater than the number of data units of a column of the mix column input data which are the state bytes in case of the AES algorithm.

The long integer arithmetic unit included in the coprocessor is used to perform the mix column transformation. The long integer arithmetic unit included in the coprocessor can be designed for calculating one data group, for example one byte, of the mix columns transformation output data, i.e., the state after the mix column transformation, in parallel, when it has registers and calculation units for processing a number of bit in parallel, the number of bits being equal to the number of bits in one column. Then, one data group of the mix columns output data can be calculated after the other which is a so-called serial-parallel or hybrid mode. Preferably, the long arithmetic unit is designed for processing a number of bits in parallel which is equal to the number of bits of the whole state. In this case, a fully parallel calculation of the mix columns transformation can be obtained. Both embodiments are made possible by interpreting the polynomials involved with the mix columns transformation that have coefficients in $GF(2^8)$ as polynomials in the field $GF(2^{32})$, in case four bytes are in one column, and treating the coefficients as binary coefficients in $GF(2)$. Then, a standard long integer arithmetic unit designed for handling binary coefficients in $GF(2)$ is suited for carrying out the calculations in $GF(2^{32})$ or, when the whole mix columns transformation is performed in parallel, in $GF(2^{128})$.

Preferred embodiments of the present invention are explained in detail with reference to the enclosed drawings, in which

Fig. 1     shows a schematic of an inventive apparatus for performing a cryptographic algorithm including a mix column transformation;

Fig. 2     illustrates one round of the AES algorithm according to Rijndael;

Fig. 3     illustrates how to be encrypted input bytes becomes bytes of the state array and become encrypted output bytes;

Fig. 4a     illustrates the fixed polynomial standardized in the AES standard having coefficients in $GF(2^8)$;

Fig. 4b     illustrates how a mix columns operation can be described as a matrix multiplication;

Fig. 4c     illustrates an expanded representation of the matrix multiplication;

Fig. 5     illustrates an overview of the mixed columns transformation;

Fig. 6a     shows the Xtime operation on the state which is used for performing a fully parallel calculation of the mix columns operation;

Fig. 6b     illustrates a flow chart to perform the Xtime operation shown in Fig. 6a;

Fig. 7     illustrates a sequence of steps to perform a fully parallel mix columns transformation;

Fig. 8     shows a sequence of steps to perform a fully parallel inverse mix columns transformation;

Fig. 9a     illustrates other Xtime operations which can be used for carrying out a fully parallel inverse mix columns transformation in accordance with another embodiment of the present invention;

Fig. 9b     illustrates a sequence of steps for performing a fully parallel inverse mix columns transformation using Xtime operations shown in Fig. 9a;

Fig. 10     illustrates a sequence of steps to perform a fully parallel key expansion;

Fig. 11     shows a step how to perform fully parallel add round key operation; and

Fig. 12     illustrates the inventive apparatus arranged for performing the key expansion transformation in the CPU and the mix columns transformation in the coprocessor, in accordance with another embodiment of the present invention.

Fig. 1 shows a block chart of an inventive apparatus for performing a cryptographic algorithm. As it has been outlined with respect to Fig. 2, the cryptographic algorithm includes a sequence of steps, one step including a mix columns transformation 208 (Fig. 2) on mix columns input data, i.e., with respect to Fig. 2, the state output data received after the shift rows step 206. The mix columns operations operates to obtain mix columns output data. The mix columns input data includes an array of data groups, e.g. bytes, the array having a predetermined number, e.g. 4, of columns, wherein one column has a plurality, e.g. 4, of data groups, and wherein one data group includes a number, e.g. 8, of data units, e.g. bits.

The inventive apparatus 10 shown in Fig. 1 includes a CPU 12 which is an 8-bit CPU in accordance with a preferred embodiment of the present invention. The cryptographic apparatus 10 further comprises a coprocessor 14 for performing at least a part of the mix columns transformation on the mix columns input data. The coprocessor 14 includes an arithmetic unit arranged for conducting calculations for a number of data units in parallel. The number of data units being equal to or greater than the number of data units of a column. In a preferred embodiment in which the cryptographic apparatus performs an encryption according to the AES algorithm, the arithmetic unit in the coprocessor is designed for parallel computation of at least 32 bits in parallel in order to parallely compute one element of the output vector on the left side of Fig. 4b, i.e. $s'_{0,c}$, at a time. Preferably, however, the arithmetic unit is designed for performing the complete mix columns transformation in parallel. In this case, the arithmetic unit is arranged for performing calculations on a number of bits, the number of bits being equal to the number of bits or data units included in the state. When, therefore, the length of the cypher key in the AES algorithm is 128, the arithmetic unit is designed for parallely processing 128 bits. When, however, the key length is 192 bits or 256 bits, the arithmetic unit is designed to parallely process 192 or 256 bits, respectively.

In accordance with the first embodiment of the present invention in which the arithmetic unit is arranged for conducting calculations for a number of data units in parallel, the number of data units being equal or greater than the number of data units of a column, one line of the calculations shown in Fig. 4c is calculated substantially in parallel such that this embodiment can be regarded as a kind of hybrid concept, in which one data group of the mix columns output data is calculated in parallel and the data groups themselves are calculated one after the other. In contrast thereto, for calculating $s'_{0,c}$, an 8-bit CPU has to calculate the first term of the right side in Fig. 4c, then the second term and, then, load the third and the fourth term to XOR the results to get $s'_{0,c}$.

In accordance with the present invention, the mix columns transformation which multiplies a 4-byte variable polynomial by a constant polynomial r(x) modulo $x^4+1$ and in which all polynomials are coefficient in $GF(2^8)$, the use of the long integer arithmetic unit allows to work directly on the 4-byte polynomials by converting them into 32-bit polynomials with coefficients in GF(2) and performing the multiplication on the field $GF(2^{32})$.

In the following, the second embodiment of the present invention will be described in which the arithmetic unit of the coprocessor is arranged for conducting calculations for a number of data units in parallel, the number of data units being equal to the number of data units included in the mix columns input data. The second embodiment provides for a fully parallel implementation of the mix columns transformation. Preferably, the Xtime(state) operation is used. The Xtime operation is defined in the AES specification. It multiplies one byte of the state by two modulo the irreducible polynomial $x^8+x^9+x^3+x+1$. This operation is performed inside the coprocessor on the, for example, 16 bytes of the state in parallel with the formula shown in Fig. 6a. (state) indicates the mix columns input data, i.e. the data output by the shift rows transformation 206.

In Fig. 6a, the meanings of the symbols in the Xtime operation are summarized. m1, m2 and m3 are fixed numbers in the well-known hexadecimal representation. The star indicates the multiplication operation in $GF(2^d)$. Dependent on the key length, d is 128, 192 or 256, when the inventive apparatus is used for performing the AES algorithm. However, other values for d are possible for other key sizes. The + sign indicates addition modulo 2, while the AND sign (&) indicates the logical AND operation. Finally, the << or >> signs indicate left and right shift operations in a register.

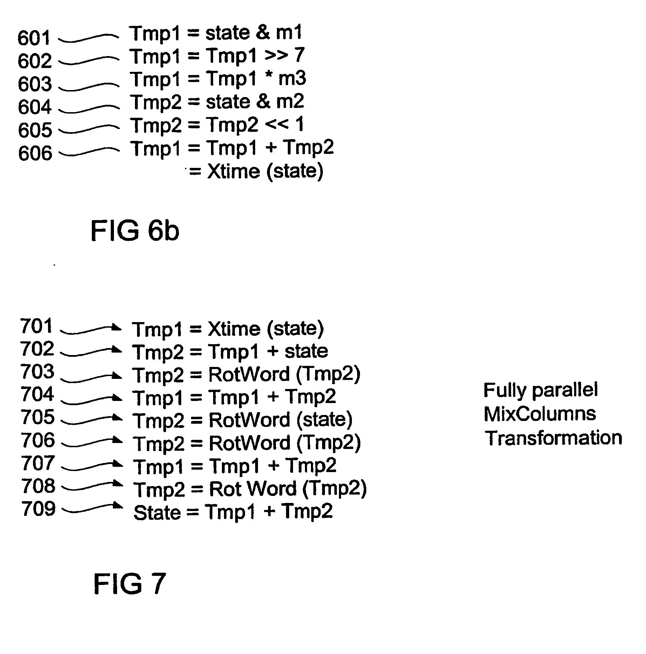

Fig. 6b shows a sequence of steps that are controlled by a sequencer included in the CPU or the coprocessor to calculate the Xtime operation on the state, i.e. the mix columns input data. To this end, the coprocessor has two temporary registers Tmp1 and Tmp2 as well as one register for the state. The state can also be a temporary register in the coprocessor, but it can alternatively be a CPU register. Then, the state bits have to be loaded into the processor when needed. In a first step 601, the first temporary register Tmp1 receives the result of logical ANDing of the state and the fixed number m1. In a second step 602 the input of the first temporary register is shifted to the right by 7 digits, which are e. g. bits. In a third step 603 the new input of the first temporary register is multiplied in $GF(2^d)$ by the fixed number m3. In the fourth step 604 the second temporary register Tmp2 receives the result of logically ANDing of the state and the fixed number m2. In the fifth step 605, the input of the second temporary register Tmp2 is left-shifted by 1 digit. In the last step, the input of the first and second temporary registers are added modulo 2 such that, in the first temporary register, the result of the Xtime operation on the state is contained.

Preferably, all operations needed for the sequence of steps shown in Fig. 6b are supported by the coprocessor. When, however, the AND operation is not supported by the coprocessor, it can be done in the CPU before loading the state into the coprocessor's register. Then, the result of the AND operation is loaded in the first and second temporary registers Tmp1 and Tmp2.

Based on the Fig. 6a and Fig. 6b definition of the Xtime operation, the whole mix columns transformation is defined to operate on the 16 bytes of the state in parallel.

Referring to Fig. 7, a sequence of steps controlled by a sequencer included in the inventive apparatus, describes a fully parallel mix columns transformation. The total number of registers needed for the implementation of the mix column transformation in accordance with the preferred embodiment shown in Fig. 7 is 3 wherein two temporary registers serve to hold the intermediate results and the third register is used for storing the state bits.

In the first step 701, the output of Fig. 6b is loaded into the first temporary register. In a second step 702, the input of the first temporary register is added modulo 2 to the state. In a third step 703, the input of the second temporary register is processed by a RotWord operation. The RotWord operation performs a word rotation and is defined in the AES specification. This operation has to be performed by the CPU on the data stored in the coprocessor registers, if it is not supported by the coprocessor itself. The RotWord( ) operation provides an output word by rotating bytes in the input word. This means that, for example, (b0,b1,b2,b3) is transformed into (b1,b2,b3,b0) wherein the bi is a data group, e.g. a byte, which consists of a number of data units, e.g. bits.

In a fourth step 704, the temporary register receives the results of an addition modulo 2 of the old value stored in the first temporary register and the value stored in the second temporary register. In a step 705, a RotWord operation is performed on the state, and the result is stored in the second temporary register. In step 706, a RotWord operation is performed on the previous result. In step 707, the contents of both temporary registers are added modulo 2 and loaded into the first temporary register. In step 708, a RotWord operation is performed on the contents of the second temporary

register. Finally, in a step 709, the contents of both registers are added modulo 2 and loaded into the state register. After the step 709, the mix columns transformation is completed and the state bytes, i.e., the mix columns output data can be input in the add round key operation 210 in Fig. 2.

The inventive apparatus shown in Fig. 1 can also be used for performing an inverse mix columns transformation in an efficient manner. As for the mix columns transformation, the inverse mix columns transformation which is needed for decryption can also be defined to operate on the 16 bytes of the state in parallel. The preferred implementation is based on the definition of the Xtime operation given in Figs. 6a and 6b.

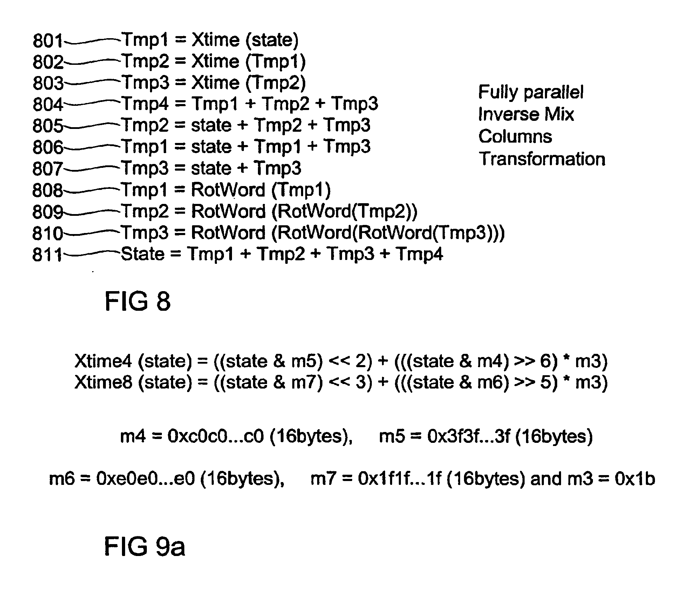

For performing the fully parallel inverse mix columns transformation shown in Fig. 8, the coprocessor needs four temporary registers Tmp1, Tmp2, Tmp3 and Tmp4 for the intermediate results and another register for the state.

A sequencer included in the inventive apparatus controls the CPU and the coprocessor to perform the sequence of the steps shown in Fig. 8. In a first step 801, the result of the Xtime operation on the state is loaded into the first temporary register. In a second step 802, the Xtime operation is performed on the content of the first temporary register. In a third step 803, a Xtime operation is performed on the content of the second temporary register. In the fourth step 804, the contents of the three temporary registers 1 to 3 are added modulo 2 and loaded into the fourth temporary register. In a fifth step 805, the contents of the state register of the second temporary register and the third registers are added modulo 2. In a sixth step 806, the contents of the state, the first and the third temporary registers are added modulo 2.

In the seventh step 807, the third temporary register and the state register are added modulo 2 and the result is loaded into the third temporary register. In an eighth step 808, a RotWord operation is performed on the first temporary register. In the ninth step 809, a RotWord operation is performed on the second temporary register. On the result of the RotWord operation, another RotWord operation is performed, and the result of the other RotWord operation is loaded into the second temporary register. In a step 810, a first RotWord operation is performed on the contents of the third temporary register. The result of this first RotWord operation is used as an input into another RotWord operation. The result of the other RotWord operation is again used as an input into a third RotWord operation. The result of the third RotWord operation is loaded into the third temporary register. Finally, in a step 811, the contents of the four temporary registers are added modulo 2 and loaded into the state. As it is known in the art, a decryption round of the AES algorithm firstly performs an inverse shift rows operation, then an inverse byte substitution operation, then an add round key operation and finally an inverse mix columns operation. Therefore, the inverse mix columns input data are the data output by the add round key operation preceding the inverse mix columns transformation. Analogously, the content of the state after the step 811 as shown in Fig. 8 is the input in an inverse shift rows operation for the next decryption round of the AES algorithm.

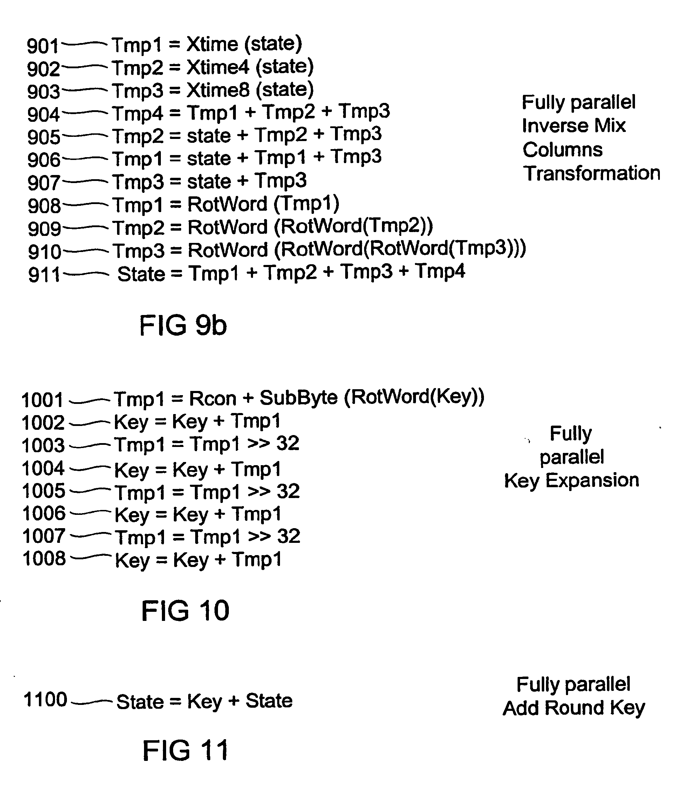

Referring to Figs. 9a and 9b, another way to implement the inverse mix columns transformation is illustrated. To this end, the two Xtime4 and Xtime8 operations are introduced as auxiliary operations. These operations are based on the fixed numbers m4, m5, m6, m7 and, again, m3. Based on the definitions given in Fig. 9, another preferred implementation of the inverse mix columns transformation is shown in Fig. 9b. In a first step 901, a second step 902 and a third step 903, the first, second and third temporary registers are loaded with the three Xtime operations shown in Fig. 9a and Fig. 6a, respectively. In a fourth step 904, the fourth temporary register receives the result of an addition of the first, two, and third temporary registers. In a fifth step 905, the second temporary registers receives the result of an addition of the state and the contents of the second and third temporary registers. In a sixth step 906, the first temporary register receives the result of an addition of the state, the first and the third temporary registers. In a seventh step 907, the third temporary registers receives the result of an addition of the state and the third temporary register. The steps 908, 909, 910 and 911 are identical to the steps 808, 809, 810 and 811 which have been explained in connection with Fig. 8.

The advantage of the inverse mix columns transformation shown in Fig. 9b compared to the implementation shown in Fig. 8 is that the Xtime, Xtime4 and Xtime8 operations can be calculated in parallel from the state which avoids the sequence of the first to third steps 801 to 803 of the implementation shown in Fig. 8. Additionally, in the case that the AND operation is not available in the coprocessor, the second implementation as shown in Fig. 9b allows to precompute all the AND values in the CPU before loading the state into the coprocessor.

In accordance with another preferred embodiment, also the key expansion operation can be implemented in the coprocessor. The 16 bytes of the key are loaded into a register of the coprocessor. Then, the new round key is calculated using a sequence of operations, which is shown in Fig. 10.

In a first step 1001, a RotWord operation is performed on the four rightmost bytes of the key data. Then, a byte substitution as defined in the AES standard is performed on the result of the RotWord operation. The result of the byte substitution is added modulo 2 to the so-called Rcon constant which is described in the AES standard and has the following value:

$$\text{Rcon} = [x^{i-1}, \{00\}, \{00\}, \{00\}],$$

where i is the round number, and x = {02} in the field GF($2^8$).

The result is put into the 4 leftmost bytes of the first temporary register, whereupon the twelve rightmost bytes are cleared, i.e., set to zero. The RotWord, SubByte and '+ Rcon' operations are preferably done by the main CPU.

In a second step, a key register is loaded with the original key value added to the contents of the first temporary register. In a third step 1003, the input of the first temporary register is shifted by 32 digits to the right. In a fourth step 1004, the contents of the key register and the first temporary register are added modulo 2. In a fifth step 1005, the contents of the first temporary register is shifted by 32 digits to the right. In a sixth step 1006, the key value added modulo 2 to the first temporary register is loaded into the key register. In a seventh step 1007, the input of the first temporary register is shifted by 32 digits to the right, and in a final step 1008, the key register contents and the contents of the first temporary register are added modulo 2 to result in a new round key which is placed in the key register.

It is to be noted that the RotWord operation and the byte substitution operation (SubByte) are performed by the 8-bit CPU on the four right most bytes of the key, and the result is put into the 4 leftmost bytes of the first temporary register. Then, the twelve right most bytes are cleared, i.e. set to 0. As it has been outlined above, Rcon is the 4-byte constant defined in the AES specification.

The total number of registers for the implementation of the key expansion transformation in the coprocessor is 2. One temporary register is needed for the intermediate results, while the other temporary register is needed for the key.

The coprocessor is also useful for performing the add round key transformation. This transformation is performed by simply adding modulo 2 state and the key inside the coprocessor. To this end, step 1100 shown in Fig. 11 is used. The coprocessor does not need any temporary register for this operation.

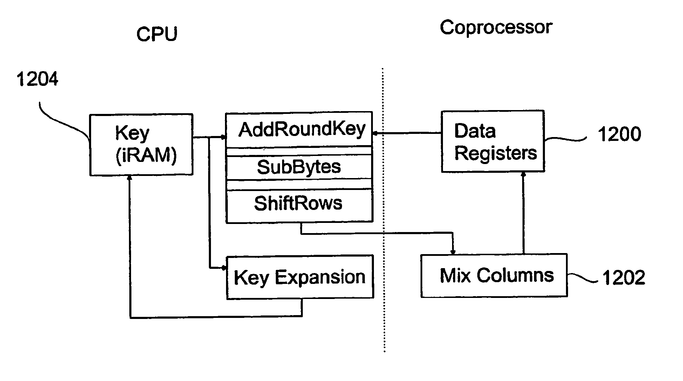

In the following, reference is made to Fig. 12 which shows the inventive apparatus for performing the AES algorithm in accordance with another embodiment of the present invention. The coprocessor includes data registers for holding necessary data for the arithmetic unit of the coprocessor performing a mix columns transformation. The arithmetic unit is termed mix columns and has the reference number 1202. In the internal RAM of the CPU, key data 1204 are stored. The CPU, which is preferably an 8-bit CPU is arranged for performing the add round key transformation, the byte substitution operation and the shift rows operation. Additionally, in accordance with the embodiment shown in Fig. 12, the CPU is further arranged to perform the key expansion operation. This has the advantage that, since key expansion and mixed columns are independent from each other, key expansion and mixed columns can be performed by the CPU and the coprocessor in parallel. This alone can reduce the number of cycles from 1200 up to 6800 or less and the bytes of the internal RAM required from 48 to 16. This saving is very important because it leaves more directly addressable RAM (a very scarce resource) space to the customer's application.

Another advantage when the mix columns transformation is performed in the arithmetic unit 1202 of the coprocessor is an improved balance of the performance of the encryption and decryption algorithm. When an 8-bit CPU alone is used for performing the AES algorithm, the decryption calculations will take about 30% more time than the encryption operations. This is due to the fact that the software implementation of the inverse mix columns transformation used for decryption is less efficient than the mix columns transformation used for encryption. When the inventive apparatus is used for performing the AES algorithm, an improved balance is obtained, since encryption and decryption operations take about the same time.

Since the coprocessor performs the multiplication of columns or key words, these operations are protected against timing attacks. Moreover, the parallel execution of the mix columns and the key expansion transformations makes more difficult power consumption analysis. Additionally, the security can be further enhanced by random masking in the CPU during the key expansion and in the coprocessor during the mix columns operation. The mask is removed during the add round key transformation. To this end, an additional register in the coprocessor is needed to store a random mask value. Preferably, the coprocessor includes two calculation units, wherein one calculation unit is used for performing the masking, while the other calculation unit in the coprocessor is used for carrying out AES steps.

The main advantages are, however, that the parallel implementation of the AES algorithm as outlined above is about two times faster than an implementation in an 8-bit CPU. Additionally, the parallel implementation requires about 3 times less user memory. In fact, an implementation of the AES encryption algorithm on a CPU together with a coprocessor having a long integer arithmetic unit requires only 20 bytes of internal RAM memory.

It is to be noted that because the only multiplication operations on GF($2^8$) are performed by a constant value m3 = 0x1b (0x means hexadecimal representation), without any reduction to the irreducible polynomial described in the AES specification, the implementation described here is not susceptible to timing attacks. Also the long arithmetic coprocessor can be used to logically random mask the algorithm's state to make more difficult power consumption related attacks, but in that case, an additional long register is needed to store the random mask value.

A coprocessor suited to perform all operations given above, thus, needs a minimum of 6 long register, wherein four registers are for temporary storage, and two registers are for storage of the "state" and the key. Additionally, the coprocessor can have one or more registers Ci to store the constants m1 to m7 used in the Xtime, Xtime4 and Xtime8 operations. Preferably, the ALU of the coprocessor is able to perform all operations needed to do the mix columns and inverse mix columns operations, but it is also possible to perform the AND and RotWord operations in the main CPU.

List of reference numbers

[0054]

10 cryptographic apparatus
12 CPU
14 coprocessor
200 sequence of steps
202 AES round
204 Byte Substitution
206 ShiftRow Transformation
208 MixColumns transformation
210 AddRoundKey transformation
300 algorithm input data array
302 State Array
304 algorithm output data array
601 to 606 Steps for calculating Xtime(state)
701 to 709 Steps for Calculating MixColumns transformation
801 to 811 Steps for Calculating Inverse MixColumns transformation
901 to 911 Steps for Calculating Inverse MixColumns transformation
1001 to 1008 Steps for calculating Key Expansion
1100 Step for Calculating AddRoundKey transformation
1200 coprocessor register
1202 long arithmetic unit for performing MixColumns transformation
1204 CPU memory

**Claims**

1. Apparatus (10) for performing a cryptographic algorithm including a sequence of steps, one step including a mix column transformation (208) on mix columns input data to obtain mix columns output data, the mix columns input data having an array of data groups, the array having a predetermined number of columns, a column having a plurality of data groups and a data group including a number of data units, comprising:

   a CPU (12) for providing the mix columns input data; and
   a coprocessor (14) for performing at least a part of the mix columns transformation on the mix columns input data, the coprocessor having an arithmetic unit arranged for conducting calculations for a number of data units in parallel, the number of data units being equal to or greater than the number of data units of a column, and wherein the coprocessor is arranged for calculations using polynomials in a field $GF(2^x)$, wherein x is equal to the number of data units processed in parallel by the arithmetic unit, wherein the polynomials have binary coefficients in GF(2), and wherein the coprocessor is further arranged for interpreting the data units as the binary coefficients ih GF(2).

2. Apparatus in accordance with claim 1 in which the cryptographic algorithm is the AES algorithm according to Rijndael, and the sequence of step is one round of the AES algorithm.

3. Apparatus in accordance with claim 1 or 2,
   in which the mix columns transformation is defined by a modular multiplication of a matrix derived from a fixed polynomial by a column of the mix columns input data to obtain a column of the mixed column output data,
   in which the coprocessor is arranged to perform the multiplications of matrix elements of a row of the matrix by the data groups of one column in parallel, wherein a column is interpreted as a polynomial in a finite field having a number of data units of one column and having coefficients in the finite field GF(2).

4. Apparatus in accordance with claim 3,
   in which the CPU (12) is arranged to load one column of the mix columns input data to the coprocessor (14) at a time until all columns of the mix columns input data have been loaded into the coprocessor, wherein, in response to receiving a column of the mix columns input data, the coprocessor (14) is arranged for performing the multiplication in parallel and summing the results to obtain a data group of the mixed columns output data, and

wherein, in response to receiving another column of the mix columns input data, the coprocessor (14) is arranged to use another row of the matrix for multiplication and summing results.

5. Apparatus in accordance with claims 3 or 4 in which the data units are bits, and the matrix is defined as follows:

   wherein 01 is the binary number 0001, 02 is the binary number 0010, 03 is the binary number 0011, and wherein one row of the matrix is regarded as a polynomial in $GF(2^{32})$.

6. Apparatus in accordance with claims 1 or 2
   in which the coprocessor (14) is arranged for performing calculations on another number of data units in parallel, the other number being greater than or equal to the number of data units in the mix columns input data.

7. Apparatus as claimed in claim 6, which is arranged for performing an operation during the mix columns transformation, the operation being described by multiplying a data group of the mix columns input data by two modulo the following irreducible polynomial:

$$x^8 + x^4 + x^3 + x + 1.$$

8. Apparatus as claimed in claim 7, in which the operation is the Xtime operation which is defined by the following equation:

$$Xtime(state) = ((state\&m2) << 1) + (((state \&m1) >> 7) * m3,$$

   wherein state is an array of data to be processed by the Xtime operation, m1 = 0x8080...80, m2 = 0x7f7f...7f, m3 = 0x1b, * is the multiplication operation in $GF(2^d)$, + is the addition modulo 2, & is the AND operation, << is a left shift of a register content, and >> is a right shift of a register content, and
   wherein the coprocessor additionally includes three registers having a length equal to or greater than the number of data units in the mix columns input data and wherein the arithmetic unit is adapted to
   perform an addition modulo 2 of the units of the two temporary registers;
   perform a right and/or left shift in a register by a specified number of data units; and
   perform a multiplication in the finite field having an order equal to or greater than the number of data units in the mix columns input data.

9. Apparatus as claimed in claim 8, wherein the coprocessor is arranged for performing an AND operation on the contents of the two registers.

10. Apparatus as claimed in claim 9, wherein the coprocessor (14) further comprises control means for controlling the arithmetic unit to perform the following steps in sequence to conduct the Xtime operation:

$$Tmp1 = state \& m1$$

$$Tmp1 = Tmp1 >> 7$$

$$Tmp1 = Tmp1 * m3$$

$$\texttt{Tmp2 = state \& m2}$$

$$\texttt{Tmp2 = Tmp2 << 1}$$

$$\texttt{Tmp1 = Tmp1 + Tmp2}$$

wherein Tmp1 is a contents of a first temporal register, Tmp2 is a contents of a second temporal register, state is a contents of a third register, and RotWord is a word rotation function.

11. Apparatus as claimed in claim 10, which further comprises a sequencer for controlling the following sequence of operations:

$$\texttt{Tmp1 = Xtime(state)}$$

$$\texttt{Tmp2 = Tmp1 + state}$$

$$\texttt{Tmp2 = RotWord(Tmp2)}$$

$$\texttt{Tmp1 = Tmp1 + Tmp2}$$

$$\texttt{Tmp2 = RotWord(state)}$$

$$\texttt{Tmp2 = RotWord(Tmp2)}$$

$$\texttt{Tmp1 = Tmp1 + Tmp2}$$

$$\texttt{Tmp2 = RotWord(Tmp2)}$$

$$\texttt{State = Tmp1 + Tmp2}$$

wherein Tmp1 is a contents of a first temporal register, Tmp2 is a contents of a second temporal register, state is a contents of a third register, and RotWord is a word rotation function wherein at least additions included in the sequence are performed by the arithmetic unit of coprocessor 14.

12. Apparatus as claimed by one of claims 1 to 11, in which another step in the sequence of steps is a key expansion step for calculating an expanded key to be used for an actual sequence of steps, from a key from the cryptographic algorithm, and
wherein the CPU (12) is arranged to work on the key expansion step, while the coprocessor is arranged to work on the mix columns step.

**13.** Apparatus as claimed in one of claims 1 to 11, in which another step in the sequence of steps is a key expansion step for calculating an expanded key to be used for an actual sequence of steps from a key from the cryptographic algorithm, and

wherein the apparatus comprises a key expansion sequencer for controlling the following sequence of steps:

$$\texttt{Tmp1 = Rcon + SubByte(RotWord(Key))*}$$

$$\texttt{Key = Key + Tmp1}$$

$$\texttt{Tmp1 = Tmp1 >> 32}$$

$$\texttt{Key = Key + Tmp1}$$

$$\texttt{Tmp1 = Tmp1 >> 32}$$

$$\texttt{Key = Key + Tmp1}$$

$$\texttt{Tmp1 = Tmp1 >> 32}$$

$$\texttt{Key = Key + Tmp1}$$

wherein Tmp1 is a contents of a first temporal register, key is a contents of a second temporal register, Rcon is a constant value, RotWord is a word rotation function, SubByte is a byte substitution function, + is an addition modulo 2, >> is a right shift of a register contents, << is a left shift of a register contents,

wherein the arittmetic unit of the coprocessor (14) is arranged to conduct the additions, and

wherein the coprocessor has the first temporal register and the second temporal register.

**14.** Apparatus as claimed in one of claims 1 to 13,

in which another step in the sequence of steps is an add round key step wherein the apparatus comprises an add round key sequencer for controlling the following steps:

$$\texttt{State = Key + state,}$$

wherein Key is a contents of a key register and state is the contents of state data of the algorithm.

**15.** Apparatus as claimed in one of claims 1 to 14, further comprising a masking unit arranged for masking data units before being loaded from the CPU into the coprocessor and/or before being loaded from the coprocessor to the CPU.

**16.** Apparatus for performing decryption in accordance with a cryptographic algorithm including a sequence of steps, one step including an inverse mix columns transformation on inverse mix columns input data to obtain inverse mix columns output data, the inverse mix columns input data having an array of data groups, the array having a predetermined number of columns, a column having a plurality of data groups, and a data group including a number of data units, comprising:

a CPU (12)for providing the inverse mix columns input data; and
a coprocessor (14) for performing at least a part of the inverse mix column transformation on the inverse mix columns input data, the coprocessor having an arithmetic unit arranged for conducting calculations for a number of data units in parallel, the number of data units being equal to or greater than the number of data units of a column, and
wherein the coprocessor is arranged for calculations using polynomials in a field GF($2^x$), wherein x is equal to the number of data units processed in parallel by the arithmetic unit, wherein the polynomials have binary coefficients in GF(2), and wherein the coprocessor is further arranged for interpreting the data units as the binary coefficients in GF(2).

17. Apparatus as claimed in claim 16, in which the cryptographic algorithm is the AES algorithm according to Rijndael and the sequence of step is one round of the AES algorithm for decryption.

18. Apparatus according to claim 16 or 17, further comprising an inverse mix columns sequencer for controlling the following steps:

```
Tmp1 = Xtime(state)

Tmp2 = Xtime(Tmp1)

Tmp3 = Xtime(Tmp2)

Tmp4 = Tmp1+Tmp2+Tmp3

Tmp2 = state+Tmp2+Tmp3

Tmp1 = state+Tmp1+Tmp3

Tmp3 = state+Tmp3

Tmp1 = RotWord(Tmp1)

Tmp2 = RotWord(RotWord(Tmp2))

Tmp3 = RotWord(RotWord(RotWord(Tmp3)))

State = Tmp1 + Tmp2 + Tmp3 + Tmp4
```

wherein Xtime is an operation defined as follows:

```
Xtime(state) = ((state&m2)<< 1) + (((state &m1)>>7)*m3,
```

wherein state is an array of data to be processed by the Xtime operation, m1 = 0x8080...80, m2 = 0x7f7f...7f, m3 = 0x1b, * is the multiplication operation in GF($2^d$), + is the addition modulo 2, & is the AND operation, << is a left shift of a register content, and >> is a right shift of a register content,

wherein Tmp1, Tmp2, Tmp3, and Tmp4 is a content of a first, second, third, and fourth temporal register, respectively, state is a content of a state data register, and RotWord is a word rotation function, and

wherein the coprocessor is arranged for performing at least additions, and includes at least five registers, each one having a length equal to or greater than the number of data units in the array for, the at least five registers including registers including the first, second, third, fourth, and fifth state data register.

**19.** Apparatus as claimed in claim 18, wherein the coprocessor (14) is arranged to perform the RotWord operation.

**20.** Apparatus as claimed in claim 16 or 17, in which the coprocessor (14) is arranged to calculate the following subsidiary functions:

```
Xtime4(state) = ((state & m5) << 2) + (((state & m4) >> 6) *
m3)
```

```
Xtime8(state) = ((state & m7) << 3) + (((state & m6) >> 5) *
m3),
```

wherein m4 = 0xc0c0...c0 (16 bytes), m5 =0x3f3f...3f (16 bytes), m6 = 0xe0e0...e0 (16 bytes), m7 = -0x1f1f...1f (16 bytes), state is an array of data to be processed by the Xtime operation, * is the multiplication operation in GF($2^d$), + is the addition modulo 2, & is the AND operation, << is a left shift of a register content, and >> is a right shift of a register content.

**21.** Apparatus as claimed in claim 20, wherein the apparatus further comprises an inverse mix columns sequencer for controlling the following steps:

```
Tmp1 = Xtime(state)
```

```
Tmp2 = Xtime4(state)
```

```
Tmp3 = Xtime8(state)
```

```
Tmp4 = Tmp1+Tmp2+Tmp3
```

```
Tmp2 = state+Tmp2+Tmp3
```

```
Tmp1 = state+Tmp1+Tmp3
```

```
Tmp3 = state+tmp3
```

$$Tmp1 = RotWord(Tmp1)$$

$$Tmp2 = RotWord(RotWord(Tmp2))$$

$$Tmp3 = RotWord(RotWord(RotWord(Tmp3)))$$

$$State = Tmp1 + Tmp2 + Tmp3 + Tmp4.$$

wherein Tmp1, Tmp2, Tmp3, and Tmp4 is a content of a first, second, third, and fourth temporal register, respectively, state is a content of a state data register, RotWord is a word rotation function, and Xtime is an operation defined as follows:

$$Xtime(state) = ((state\&m2)<< 1) + (((state \&m1)>>7)*m3,$$

wherein m1 = 0x8080...80, m2 = 0x7f7f...7f, and m3 = 0x1b.

**22.** Apparatus as claimed in claim 21, in which the CPU (12) is arranged to perform the AND operations.

**23.** Method for performing a cryptographic algorithm including a sequence of steps, one step including a mix column transformation (208) on mix columns input data to obtain mix columns output data, the mix columns input data having an array of data groups, the array having a predetermined number of columns, a column having a plurality of data groups and a data group including a number of data units, comprising the following steps:

    providing the mix columns input data; and
    performing at least a part of the mix columns transformation on the mix columns input data, using an arithmetic unit arranged for conducting calculations for a number of data units in parallel, the number of data units being equal to or greater than the number of data units of a column, wand
    wherein the number of data units is interpreted as a polynomial in a field $GF(2^x)$, wherein x is equal to the number of data units processed in parallel by the arithmetic unit, wherein the polynomials have binary coefficients in GF(2), and wherein the data units are interpreted as the binary coefficients in GF(2).

**24.** Method for performing decryption in accordance with a cryptographic algorithm including a sequence of steps, one step including an inverse mix columns transformation on inverse mix columns input data to obtain inverse mix columns output data, the inverse mix columns input data having an array of data groups, the array having a predetermined number of columns, a column having a plurality of data groups, and a data group including a number of data units, comprising the following steps:

    providing the inverse mix columns input data; and
    performing at least a part of the inverse mix column transformation on the inverse mix columns input data using an arithmetic unit arranged for conducting calculations for a number of data units in parallel, the number of data units being equal to or greater than the number of data units of a column, and
    wherein the number of data units is interpreted as a polynomial in a field $GF(2^x)$, wherein x is equal to the number of data units processed in parallel by the arithmetic unit, wherein the polynomials have binary coefficients in GF(2), and wherein the data units are interpreted as the binary coefficients in GF(2).

**Patentansprüche**

**1.** Vorrichtung (10) zum Durchführen eines kryptographischen Algorithmus, der eine Sequenz von Schritten umfasst, wobei ein Schritt eine Misch-Spalten-Transformation (208) an Misch-Spalten-Eingangsdaten umfasst, um Misch-Spalten-Ausgangsdaten zu erhalten, wobei die Misch-Spalten-Eingangsdaten ein Array von Datengruppen aufweisen, wobei das Array eine vorbestimmte Anzahl von Spalten aufweist, wobei eine Spalte eine Mehrzahl von Datengruppen aufweist und eine Datengruppe eine Anzahl von Dateneinheiten umfasst, wobei die Vorrichtung folgende Merkmale umfasst:

eine CPU (12) zum Bereitstellen der Misch-Spalten-Eingangsdaten; und
einen Coprozessor (14) zum Durchführen von zumindest einem Teil der Misch-Spalten-Transformation an den Misch-Spalten-Eingangsdaten, wobei der Coprozessor eine arithmetische Einheit aufweist, die angeordnet ist zum parallelen Durchführen von Berechnungen für eine Anzahl von Dateneinheiten, wobei die Anzahl von Dateneinheiten gleich ist wie oder größer ist als die Anzahl von Dateneinheiten einer Spalte, und wobei der Coprozessor angeordnet ist für Berechnungen unter Verwendung von Polynomen in einem Feld GF($2^x$), wobei x gleich der Anzahl von Dateneinheiten ist, die durch die arithmetische Einheit parallel verarbeitet werden, wobei die Polynome binäre Koeffizienten in GF(2) aufweisen, und wobei der Coprozessor ferner angeordnet ist zum Interpretieren der Dateneinheit als die binären Koeffizienten in GF(2).

2. Vorrichtung gemäß Anspruch 1, bei der der kryptographische Algorithmus der AES-Algorithmus gemäß Rijndael ist und die Sequenz von Schritten eine Runde des AES-Algorithmus ist.

3. Vorrichtung gemäß Anspruch 1 oder 2,
bei der die Misch-Spalten-Transformation definiert ist durch eine modulare Multiplikation einer Matrix, die von einem festen Polynom abgeleitet ist, mit einer Spalte der Misch-Spalten-Eingangsdaten, um eine Spalte der Misch-Spalten-Ausgangsdaten zu erhalten,
bei der der Coprozessor angeordnet ist, um die Multiplikationen von Matrixelementen einer Zeile der Matrix mit den Datengruppen einer Spalte parallel durchzuführen, wobei eine Spalte interpretiert wird als ein Polynom in einem finiten Feld, das eine Anzahl von Dateneinheiten einer Spalte aufweist und Koeffizienten in dem finiten Feld GF(2) aufweist.

4. Vorrichtung gemäß Anspruch 3,
bei der die CPU (12) angeordnet ist, um die Spalten der Misch-Spalten-Eingangsdaten einzeln in den Coprozessor (14) zu laden, bis alle Spalten der Misch-Spalten-Eingangsdaten in den Coprozessor geladen wurden, wobei ansprechend auf das Empfangen einer Spalte der Misch-Spalten-Eingangsdaten der Coprozessor (14) angeordnet ist zum parallelen Durchführen der Multiplikation und Summieren der Ergebnisse, um eine Datengruppe der Misch-Spalten-Ausgangsdaten zu erhalten, und
wobei ansprechend auf das Empfangen einer weiteren Spalte der Misch-Spalten-Eingangsdaten der Coprozessor (14) angeordnet ist, um eine weitere Zeile der Matrix für Multiplikation und Summierergebnisse zu verwenden.

5. Vorrichtung gemäß Anspruch 3 oder 4, bei der die Dateneinheiten Bits sind und die Matrix wie folgt definiert ist:

wobei 01 die Binärzahl 0001 ist, 02 die Binärzahl 0010 ist, 03 die Binärzahl 0011 ist und wobei eine Zeile der Matrix als ein Polynom in GF($2^{32}$) angesehen wird.

6. Vorrichtung gemäß Anspruch 1 oder 2,
bei der der Coprozessor (14) angeordnet ist zum parallelen Durchführen von Berechnungen an einer anderen Anzahl von Dateneinheiten, wobei die andere Anzahl größer ist als oder gleich ist wie die Anzahl von Dateneinheiten in den Misch-Spalten-Eingangsdaten.

7. Vorrichtung gemäß Anspruch 6, die angeordnet ist zum Durchführen einer Operation während der Misch-Spalten-Transformation, wobei die Operation beschrieben wird durch Multiplizieren einer Datengruppe der Misch-Spalten-Eingangsdaten mit zwei Modulo des folgenden irreduziblen Polynoms:

$$x^8 + x^4 + x^3 + x + 1.$$

8. Vorrichtung gemäß Anspruch 7, bei der der Betrieb die Xtime-Operation ist, die definiert ist durch die folgende Gleichung:

$$Xtime(state) = ((state \ \& \ m2) << 1) + (((state \ \& \ m1) >> 7) * m3,$$

wobei state ein Array von Daten ist, die durch die Xtime-Operation zu verarbeiten sind, m1 = 0 x 8080 ... 80, m2 = 0 x 7f7f ... 7f, m3 = 0 x 1b, * die Multiplikationsoperation in $GF(2^d)$ ist, + die Addition Modulo 2 ist, & die UND-Operation ist, << eine Linksverschiebung eines Registerinhalts ist und >> eine Rechtsverschiebung eines Registerinhalts ist, und

wobei der Coprozessor zusätzlich drei Register umfasst, die eine Länge aufwiesen, die gleich ist wie oder größer ist als die Anzahl von Dateneinheiten in den Misch-Spalten-Eingangsdaten und wobei die arithmetische Einheit angepasst ist zum

Durchführen einer Addition Modulo 2 der Einheiten der zwei temporären Register;

Durchführen einer Rechts- und/oder Linksverschiebung in einem Register um eine spezifizierte Anzahl von Dateneinheiten; und

Durchführen einer Multiplikation in dem finiten Feld, das eine Größenordnung aufweist, die gleich ist wie oder größer ist als die Anzahl von Dateneinheiten in den Misch-Spalten-Eingangsdaten.

**9.** Vorrichtung gemäß Anspruch 8, bei der der Coprozessor angeordnet ist zum Durchführen einer UND-Operation an den Inhalten der zwei Register.

**10.** Vorrichtung gemäß Anspruch 9, bei der der Coprozessor (14) ferner eine Steuereinrichtung umfasst zum Steuern der arithmetischen Einheit, um die folgenden Schritte hintereinander durchzuführen, um die Xtime-Operation durchzuführen:

$$Tmp1 = state \ \& \ m1$$

$$Tmp1 = Tmp1 >> 7$$

$$Tmp1 = Tmp1 * m3$$

$$Tmp2 = state \ \& \ m2$$

$$Tmp2 = Tmp2 << 1$$

$$Tmp1 = Tmp1 + Tmp2$$

wobei Tmp1 ein Inhalt eines ersten temporären Registers ist, Tmp2 ein Inhalt eines zweiten temporären Registers ist, state ein Inhalt eines dritten Registers ist und RotWord eine Wortrotationsfunktion ist.

**11.** Vorrichtung gemäß Anspruch 10, die ferner einen Sequenzer umfasst zum Steuern der folgenden Sequenz von Operationen:

$$Tmp1 = Xtime(state)$$

$$Tmp2 = Tmp1 + state$$

$$Tmp2 = RotWord(Tmp2)$$

$$Tmp1 = Tmp1 + Tmp2$$

$$Tmp2 = RotWord(state)$$

$$Tmp2 = RotWord(Tmp2)$$

$$Tmp1 = Tmp1 + Tmp2$$

$$Tmp2 = RotWord(Tmp2)$$

$$state = Tmp1 + Tmp2$$

wobei Tmp1 ein Inhalt eines ersten temporären Registers ist, Tmp2 ein Inhalt eines zweiten temporären Registers ist, state ein Inhalt eines dritten Registers ist, und RotWord eine Wortrotationsfunktion ist, wobei zumindest Additionen, die in der Sequenz enthalten sind, durch die arithmetische Einheit des Coprozessors (14) durchgeführt werden.

12. Vorrichtung gemäß einem der Ansprüche 1 bis 11, bei der ein weiterer Schritt in der Sequenz von Schritten ein Schlüsselexpansionsschritt ist zum Berechnen eines expandierten Schlüssels, der für eine tatsächliche Sequenz von Schritten zu verwenden ist, von einem Schlüssel von dem kryptographischen Algorithmus, und
wobei die CPU (12) angeordnet ist, um an dem Schlüsselexpansionsschritt zu arbeiten, während der Coprozessor angeordnet ist, um an dem Misch-Spalten-Schritt zu arbeiten.

13. Vorrichtung gemäß einem der Ansprüche 1 bis 11, bei der ein weiterer Schritt in der Sequenz von Schritten ein Schlüsselexpansionsschritt ist zum Berechnen eines expandierten Schlüssels, der für eine tatsächliche Sequenz von Schritten zu verwenden ist, von einem Schlüssel von dem kryptographischen Algorithmus, und
wobei die Vorrichtung einen Schlüsselexpansionssequenzer zum Steuern der folgenden Sequenz von Schritten umfasst:

$$Tmp1 = Rcon + SubByte\ (RotWord(key))\ *$$

$$key = key + Tmp1$$

$$Tmp1 = Tmp1 >> 32$$

$$key = key + Tmp1$$

$$Tmp1 = Tmp1 >> 32$$

$$key = key + Tmp1$$

$$\text{Tmp1} = \text{Tmp1} >> 32$$

$$\text{key} = \text{key} + \text{Tmp1}$$

wobei Tmp1 ein Inhalt eines ersten temporären Registers ist, key ein Inhalt eines zweiten temporären Registers ist, Rcon ein konstanter Wert ist, RotWord eine Wortrotationsfunktion ist, SubByte eine Byte-Substitutionsfunktion ist, + eine Addition Modulo 2 ist, >> eine Rechtsverschiebung eines Registerinhalts ist, << eine Linksverschiebung eines Registerinhalts ist,
wobei die arithmetische Einheit des Coprozessors (14) angeordnet ist, um die Additionen durchzuführen, und
wobei der Coprozessor das erste temporäre Register und das zweite temporäre Register aufweist.

**14.** Vorrichtung gemäß einem der Ansprüche 1 bis 13,
bei der ein weiterer Schritt in der Sequenz von Schritten ein Hinzufügen-Runden-Schlüssel-Schritt ist, wobei die Vorrichtung einen Hinzufügen-Runden-Schlüssel-Sequenzer umfasst zum Steuern der folgenden Schritte:

$$\text{State} = \text{Key} + \text{state,}$$

wobei Key ein Inhalt eines Schlüsselregisters ist und state der Inhalt der Zustandsdaten des Algorithmus ist.

**15.** Vorrichtung gemäß einem der Ansprüche 1 bis 14, die ferner eine Maskiereinheit umfasst, die angeordnet ist zum Maskieren von Dateneinheiten, bevor dieselben von der CPU in den Coprozessor geladen werden und/oder bevor dieselben von dem Coprozessor zu der CPU geladen werden.

**16.** Vorrichtung zum Durchführen von Verschlüsselung gemäß einem kryptographischen Algorithmus, der eine Sequenz von Schritten umfasst, wobei ein Schritt eine inverse Misch-Spalten-Transformation an inversen Misch-Spalten-Eingangsdaten umfasst, um inverse Misch-Spalten-Ausgangsdaten zu erhalten, wobei die inversen Misch-Spalten-Eingangsdaten ein Array von Datengruppen aufweisen, das Array eine vorbestimmte Anzahl von Spalten aufweist, eine Spalte eine Mehrzahl von Datengruppen aufweist und eine Datengruppe eine Anzahl von Dateneinheiten umfasst, wobei die Vorrichtung folgende Merkmale umfasst:

eine CPU (12) zum Bereitstellen der inversen Misch-Spalten-Eingangsdaten; und
einen Coprozessor (14) zum Durchführen von zumindest einem Teil der inversen Misch-Spalten-Transformation an den inversen Misch-Spalten-Eingangsdaten, wobei der Coprozessor eine arithmetische Einheit aufweist, die angeordnet ist zum parallelen Durchführen von Berechnungen für eine Anzahl von Dateneinheiten, wobei die Anzahl von Dateneinheiten gleich ist wie oder größer ist als die Anzahl von Dateneinheiten einer Spalte, und wobei der Coprozessor angeordnet ist für Berechnungen unter Verwendung von Polynomen in einem Feld GF $(2^x)$, wobei x gleich der Anzahl von Dateneinheiten ist, die durch die arithmetische Einheit parallel verarbeitet werden, wobei die Polynome binäre Koeffizienten in GF(2) aufweisen, und wobei der Coprozessor ferner angeordnet ist zum Interpretieren der Dateneinheiten als die binären Koeffizienten in GF(2).

**17.** Vorrichtung gemäß Anspruch 16, bei der der kryptographische Algorithmus der AES-Algorithmus gemäß Rijndael ist und die Sequenz von Schritten eine Runde des AES-Algorithmus für Entschlüsselung ist.

**18.** Vorrichtung gemäß Anspruch 16 oder 17, die ferner einen inversen Misch-Spalten-Sequenzer zum Steuern der folgenden Schritte umfasst:

$$\text{Tmp1} = \text{Xtime(state)}$$

$$Tmp2 = Xtime(Tmp1)$$

$$Tmp3 = Xtime(Tmp2)$$

$$Tmp4 = Tmp1 + Tmp2 + Tmp3$$

$$Tmp2 = state + Tmp2 + Tmp3$$

$$Tmp1 = state + Tmp1 + Tmp3$$

$$Tmp3 = state + Tmp3$$

$$Tmp1 = RotWord(Tmp1)$$

$$Tmp2 = RotWord(RotWord(Tmp2))$$

$$Tmp3 = RotWord(RotWord(RotWord(Tmp3)))$$

$$state = Tmp1 + Tmp2 + Tmp3 + Tmp4$$

wobei Xtime eine Operation ist, die wie folgt definiert ist:

$$Xtime(state) = ((state \& m2) << 1) + (((state \& m1) >> 7) * m3,$$

wobei state ein Array von Daten ist, die durch die Xtime-Operation zu verarbeiten sind, m1 = 0 x 8080 ... 80, m2 = 0 x 7f7f ... 7f, m3 = 0 x 1b, * die Multiplikationsoperation in GF($2^d$) ist, + die Addition Modulo 2 ist, & die UND-Operation ist, << eine Linksverschiebung eines Registerinhalts ist und >> eine Rechtsverschiebung eines Registerinhalts ist,
wobei Tmp1, Tmp2, Tmp3 und Tmp4 ein Inhalt eines ersten, zweiten, dritten beziehungsweise vierten temporären Registers ist, state ein Inhalt eines Zustandsdatenregisters ist und RotWord eine Wortrotationsfunktion ist, und
wobei der Coprozessor angeordnet ist zum Durchführen zumindest von Additionen und zumindest fünf Register umfasst, wobei jeder eine Länge aufweist, die gleich ist wie oder größer ist als die Anzahl von Dateneinheiten in dem Array für die zumindest fünf Register, die Register umfassen, die das erste, zweite, dritte, vierte und fünfte Zustandsdatenregister umfassen.

19. Vorrichtung gemäß Anspruch 18, bei der der Coprozessor (14) angeordnet ist, um die RotWord-Operation durchzuführen.

20. Vorrichtung gemäß Anspruch 16 oder 17, bei der der Coprozessor (14) angeordnet ist, um die nachfolgenden Hilfsfunktionen zu berechnen:

$$Xtime4(state) = ((state \& m5) << 2) + (((state \& m4) >> 6) * m3,$$

$$Xtime8(state) = ((state \ \& \ m7) << 3) + (((state \ \& \ m6) >> 5) * m3,$$

wobei m4 = 0 x c0c0 ... c0 (16 Bytes), m5 = 0 x 3f3f ... 3f (16 Bytes), m6 = 0 x e0e0 ... e0 (16 Bytes), m7 = 0 x 1f1f ... 1f(16 Bytes), state ein Array von Daten ist, die durch die Xtime-Operation zu verarbeiten sind, * die Multiplikationsoperation in GF($2^d$) ist, + die Addition Modulo 2 ist, & die UND-Operation ist, << eine Linksverschiebung eines Registerinhalts ist und >> eine Rechtsverschiebung eines Registerinhalts ist.

**21.** Vorrichtung gemäß Anspruch 20, bei der die Vorrichtung ferner einen inversen Misch-Spalten-Sequenzer umfasst zum Steuern der folgenden Schritte:

$$Tmp1 = Xtime(state)$$

$$Tmp2 = Xtime4(state)$$

$$Tmp3 = Xtime8(state)$$

$$Tmp4 = Tmp1 + Tmp2 + Tmp3$$

$$Tmp2 = state + Tmp2 + Tmp3$$

$$Tmp1 = state + Tmp1 + Tmp3$$

$$Tmp3 = state + Tmp3$$

$$Tmp1 = RotWord(Tmp1)$$

$$Tmp2 = RotWord(RotWord(Tmp2))$$

$$Tmp3 = RotWord(RotWord(RotWord(Tmp3)))$$

$$state = Tmp1 + Tmp2 + Tmp3 + Tmp4$$

wobei Tmp1, Tmp2, Tmp3 und Tmp4 ein Inhalt eines ersten, zweiten, dritten beziehungsweise vierten temporären Registers ist, state ein Inhalt eines Zustandsdatenregisters ist, RotWord eine Wortrotationsfunktion ist und Xtime eine Operation ist, die wie folgt definiert ist:

$$Xtime(state) = ((state \ \& \ m2) << 1) + (((state \ \& \ m1) >> 7) * m3,$$

wobei m1 = 0 x 8080 ... 80, m2 = 0 x 7f7f ... 7f und m3 = 0 x 1b.

**22.** Vorrichtung gemäß Anspruch 21, bei der die CPU (12) angeordnet ist, um die UND-Operationen durchzuführen.

**23.** Verfahren zum Durchführen eines kryptographischen Algorithmus, der eine Sequenz von Schritten umfasst, wobei ein Schritt eine Misch-Spalten-Transformation (208) an Misch-Spalten-Eingangsdaten umfasst, um Misch-Spalten-Ausgangsdaten zu erhalten, wobei die Misch-Spalten-Eingangsdaten ein Array von Datengruppen aufweisen, wobei das Array eine vorbestimmte Anzahl von Spalten aufweist, eine Spalte eine Mehrzahl von Datengruppen aufweist und eine Datengruppe eine Anzahl von Dateneinheiten umfasst, wobei das Verfahren folgende Schritte umfasst:

Bereitstellen der Misch-Spalten-Eingangsdaten; und
Durchführen von zumindest einem Teil der Misch-Spalten-Transformation an den Misch-Spalten-Eingangsdaten unter Verwendung einer arithmetischen Einheit, die angeordnet ist zum parallelen Durchführen von Berechnungen für eine Anzahl von Dateneinheiten, wobei die Anzahl von Dateneinheiten gleich ist wie oder größer ist als die Anzahl von Dateneinheiten einer Spalte, und
wobei die Anzahl von Dateneinheiten interpretiert wird als ein Polynom in einem Feld $GF(2^x)$, wobei x gleich der Anzahl von Dateneinheiten ist, die durch die arithmetische Einheit parallel verarbeitet werden, wobei die Polynome binäre Koeffizienten in GF(2) aufweisen und wobei die Dateneinheiten als die binären Koeffizienten in GF(2) interpretiert werden.

**24.** Verfahren zum Durchführen von Verschlüsselung gemäß einem kryptographischen Algorithmus, der eine Sequenz von Schritten umfasst, wobei ein Schritt eine inverse Misch-Spalten-Transformation an inversen Misch-Spalten-Eingangsdaten umfasst, um inverse Misch-Spalten-Ausgangsdaten zu erhalten, wobei die inversen Misch-Spalten-Eingangsdaten ein Array von Datengruppen aufweisen, wobei das Array eine vorbestimmte Anzahl von Spalten aufweist, eine Spalte eine Mehrzahl von Datengruppen aufweist und eine Datengruppe eine Anzahl von Dateneinheiten umfasst, wobei das Verfahren die folgenden Schritte umfasst:

Bereitstellen der inversen Misch-Spalten-Eingangsdaten; und
Durchführen von zumindest einem Teil der inversen Misch-Spalten-Transformation an den inversen Misch-Spalten-Eingangsdaten unter Verwendung einer arithmetischen Einheit, die angeordnet ist zum parallelen Durchführen von Berechnungen für eine Anzahl von Dateneinheiten, wobei die Anzahl von Dateneinheiten gleich ist wie oder größer ist als die Anzahl von Dateneinheiten einer Spalte, und
wobei die Anzahl von Dateneinheiten interpretiert wird als ein Polynom in einem Feld $GF(2^x)$, wobei x gleich der Anzahl von Dateneinheiten ist, die durch die arithmetische Einheit parallel verarbeitet werden, wobei die Polynome binäre Koeffizienten in GF(2) aufweisen und wobei die Dateneinheiten als die binären Koeffizienten in GF(2) interpretiert werden.

**Revendications**

**1.** Appareil (10) pour effectuer un algorithme cryptographique comportant une séquence d'étapes, une étape comportant une transformation de colonnes de mélange (208) sur les données d'entrée de colonnes de mélange, pour obtenir des données de sortie de colonnes de mélange, les données d'entrée de colonnes de mélange présentant une rangée de groupes de données, la rangée présentant un nombre prédéterminé de colonnes, une colonne présentant une pluralité de groupes de données et un groupe de données comportant un nombre d'unités de données, comprenant:

une CPU (12) destinée à fournir les données d'entrée de colonnes de mélange; et
un co-processeur (14) destiné à effectuer au moins une partie de la transformation de colonnes de mélange sur les données d'entrée de colonnes de mélange, le co-processeur présentant une unité arithmétique aménagée pour effectuer en parallèle les calculs pour un nombre d'unités de données, le nombre d'unités de données étant égal ou supérieur au nombre d'unités de données d'une colonne, et
dans lequel le co-processeur est aménagé pour effectuer les calculs à l'aide de polynômes dans un champ $GF(2^x)$, où x est égal au nombre d'unités de données traitées en parallèle par l'unité arithmétique, où les polynômes ont des coefficients binaires dans GF(2), et où le co-processeur est aménagé par ailleurs pour interpréter les unités de données comme coefficients binaires dans GF(2).

**2.** Appareil selon la revendication 1, dans lequel l'algorithme cryptographique est l'algorithme AES selon Rijndael, et la séquence d'étape est un tour de l'algorithme AES.

**3.** Appareil selon la revendication 1 ou 2,
dans lequel la transformation de colonnes de mélange est définie par une multiplication modulaire d'une matrice dérivée d'un polynôme fixe par une colonne des données d'entrée des colonnes de mélange, pour obtenir une colonne des données de sortie de colonnes mélangées,

dans lequel le co-processeur est aménagé pour effectuer en parallèle les multiplications d'éléments de matrice d'une rangée de la matrice par les groupes de données d'une colonne, où une colonne est interprétée comme polynôme dans un champ fini ayant un nombre d'unités de données d'une colonne et ayant des coefficients dans le champ fini GF(2).

4. Appareil selon la revendication 3,

dans lequel la CPU (12) est aménagée pour charger une colonne des données d'entrée de colonnes de mélange dans le co-processeur (14) à un moment, jusqu'à ce que toutes les colonnes des données d'entrée de colonne de mélange aient été chargées dans le co-processeur, où, en réponse à la réception d'une colonne des données d'entrée de colonnes de mélange, le co-processeur (14) est aménagé pour effectuer la multiplication en parallèle et additionner les résultats, pour obtenir un groupe de données des données de sortie de colonnes mélangées, et dans lequel, en réponse à la réception d'une autre colonne des données d'entrée de colonnes de mélange, le co-processeur (14) est aménagé pour utiliser une autre rangée de la matrice pour la multiplication et l'addition des résultats.

5. Appareil selon les revendications 3 ou 4, dans lequel les unités de données sont des bits, et la matrice est définie comme suit:

où 01 est le nombre binaire 0001, 02 est le nombre binaire 0010, 03 est le nombre binaire 0011, et où une rangée de la matrice est considérée comme polynôme dans GF$\{2^{32}\}$).

6. Appareil selon les revendications 1 ou 2,

dans lequel le co-processeur (14) est aménagé pour effectuer en parallèle les calculs sur un autre nombre d'unités de données, l'autre nombre étant supérieur ou égal au nombre d'unités de données dans les données d'entrée de colonnes de mélange.

7. Appareil selon la revendication 6, qui est aménagé pour effectuer une opération pendant la transformation de colonnes de mélange, l'opération étant décrite par la multiplication d'un groupe de données des données d'entrée de colonnes de mélange par deux modulo le polynôme irréductible suivant:

$$x^8 + x^4 + x^3 + x + 1.$$

8. Appareil selon la revendication 7, dans lequel l'opération est l'opération Xtime qui est définie par l'équation suivante:

$$\text{Xtime (state)} = ((\text{state}\&\text{m2}) << 1) + (((\text{state }\&\text{ml}) >> 7)*\text{m3},$$

où state est une rangée de données à traiter par l'opération Xtime, m1 = 0x8080 ... 80, m2 = 0x7f7f ...7f, m3 = Oxlb, * est l'opération de multiplication dans GF($2^d$), + est l'addition modulo 2, & est l'opération AND, << est un décalage à gauche d'un contenu de registre, et >> est un décalage à droite d'un contenu de registre, et dans lequel le co-processeur comporte en outre trois registres ayant une longueur égale ou supérieure au nombre d'unités de données dans les données d'entrée de colonnes de mélange et où l'unité arithmétique est adaptée pour effectuer une addition modulo 2 des unités des deux registres temporaires;

effectuer dans un registre un décalage à droite et/ou à gauche d'un nombre spécifié d'unités de données; et effectuer une multiplication dans le champ fini ayant un ordre égal ou supérieur au nombre d'unités de données dans les données d'entrée de colonnes de mélange.

9. Appareil selon la revendication 8, dans lequel le co-processeur est aménagé pour effectuer une opération AND sur les contenus des deux registres.

10. Appareil selon la revendication 9, dans lequel le co-processeur (14) comprend par ailleurs des moyens de commande pour commander l'unité arithmétique pour effectuer les étapes suivantes en séquence, pour réaliser l'opération

Xtime:

$$Tmp1 = state \& m1$$

$$Tmp1 = Tmp1 >> 7$$

$$Tmp1 = Tmp1 * m3$$

$$Tmp2 = state \& m2$$

$$Tmp2 = Tmp2 << 1$$

$$Tmp1 = Tmp1 + Tmp2$$

où Tmp1 est un contenu d'un premier registre temporaire, Tmp2 est un contenu d'un deuxième registre temporaire, state est un contenu d'un troisième registre, et RotWord est une fonction de rotation de mot.

**11.** Appareil selon la revendication 10, qui comprend par ailleurs un séquenceur destiné à commander la séquence d'opérations suivante:

$$Tmp1 = Xtime(state)$$

$$Tmp2 = Tmp1 + state$$

$$Tmp2 = RotWord\ (Tmp2)$$

$$Tmp1 = Tmp1 + Tmp2$$

$$Tmp2 = RotWord(state)$$

$$Tmp2 = RotWord(Tmp2)$$

$$Tmp1 - Tmp1 + Tmp2$$

$$Tmp2 = RotWord\ (Tmp2)$$

$$State = Tmp1 + Tmp2$$

où Tmp 1 est un contenu d'un premier registre temporaire, Tmp2 est un contenu d'un deuxième registre temporaire, state est un contenu d'un troisième registre, et RotWord est une fonction de rotation de mot, où au moins les additions incluses dans la séquence sont effectuées par l'unité arithmétique du co-processeur 14.

12. Appareil selon l'une des revendications 1 à 11, dans lequel une autre étape dans la séquence d'étapes est une étape d'expansion de clé pour calculer une clé étendue à utiliser pour une séquence d'étapes réelle, à partir d'une clé de l'algorithme cryptographique, et

dans lequel la CPU (12) est aménagée pour fonctionner sur l'étape d'expansion de clé, tandis que le co-processeur est aménagé pour fonctionner sur l'étape de colonnes de mélange.

13. Appareil selon l'une des revendications 1 à 11, dans lequel une autre étape dans la séquence d'étapes est une étape d'expansion de clé pour calculer une clé étendue à utiliser pour une séquence d'étapes réelle, à partir d'une clé de l'algorithme cryptographique, et

dans lequel l'appareil comprend un séquenceur d'expansion de clé destine à commander la séquence d'étapes suivante:

$$Tmp1 = Rcon + SubByte(RotWord(Key))*$$

$$Key = Key + Tmp1$$

$$Tmp1 = Tmp1 >> 32$$

$$Key = Key + Tmp1$$

$$Tmp1 = Tmp1 >> 32$$

$$Key = Key + Tmp1$$

$$Tmp1 = Tmp1 >> 32$$

$$Key = Key + Tmp1$$

où Tmp1 est un contenu d'un premier registre temporaire, key est un contenu d'un deuxième registre temporaire, Rcon est une valeur constante, RotWord est une fonction de rotation de mot, SubByte est une fonction de substitution d'octet, + est une addition modulo 2, >> est un décalage à droite d'un contenu de registre, << est un décalage à gauche d'un contenu de registre,

dans lequel l'unité arithmétique du co-processeur (14) est aménagé pour effectuer les additions, et

dans lequel le co-processeur présente le premier registre temporaire et le deuxième registre temporaire.

14. Appareil selon l'une des revendications 1 à 13,

dans lequel une autre étape dans la séquence d'étapes est une étape de clé de tour d'addition, dans lequel l'appareil comprend un séquenceur de clé de tour d'addition destinée à commander les étapes suivantes:

$$State = Key + state,$$

où Key est un contenu d'un registre de clés et state est le contenu de données d'état de l'algorithme.

**15.** Appareil selon l'une des revendications 1 à 14, comprenant par ailleurs une unité de masquage aménagée pour masquer les unités de données avant d'être chargées de la CPU dans le co-processeur et/ou après être chargées du co-processeur dans la CPU.

**16.** Appareil pour effectuer un décryptage selon un algorithme cryptographique comportant une séquence d'étapes, une étape comportant une transformation de colonnes de mélange inverse sur les données d'entrée de colonnes de mélange inverses, pour obtenir des données de sortie de colonnes de mélange inverses, les données d'entrée de colonnes de mélange inverses présentant une rangée de groupes de données, la rangée ayant un nombre prédéterminé de colonnes, une colonne ayant une pluralité de groupes de données, et un groupe de données comportant un nombre d'unités de données, comprenant:

une CPU (12) destinée à fournir les données d'entrée de colonnes de mélange inverses; et
un co-processeur (14) destiné à effectuer au moins une partie de la transformation de colonnes de mélange inverse sur les données d'entrée de colonnes de mélange inverse, le co-processeur présentant une unité arithmétique aménagée pour effectuer en parallèle les calculs pour un nombre d'unités de données, le nombre d'unités de données étant égal ou supérieur au nombre d'unités de données d'une colonne, et
dans lequel le co-processeur est aménagé pour effectuer les calculs à l'aide de polynômes dans un champ GF $(2^x)$, où x est égal au nombre d'unités de données traitées en parallèle par l'unité arithmétique, où les polynômes ont des coefficients binaires dans GF(2), et dans lequel le co-processeur est aménagé par ailleurs pour interpréter les unités de données comme coefficients binaires dans GF(2).

**17.** Appareil selon la revendication 16, dans lequel l'algorithme cryptographique est l'algorithme AES selon Rijndael et la séquence d'étape est un tour de l'algorithme AES pour le décryptage.

**18.** Appareil selon la revendication 16 ou 17, comprenant par ailleurs un séquenceur de colonnes de mélange inverse destiné à commander les étapes suivantes:

$$Tmp1 = Xtime(state)$$

$$Tmp2 - Xtime(Tmp1)$$

$$Tmp3 = Xtime(Tmp2)$$

$$Tmp4 = Tmp1+Tmp2+Tmp3$$

$$Tmp2 = state+Tmp2+Tmp3$$

$$Tmp1 = state+Tmp1-Tmp3$$

$$Tmp3 = state+Tmp3$$

$$Tmp1 = RotWord(Tmp1)$$

$$Tmp2 = RotWord(RotWord(Tmp2))$$

$$Tmp3 = RotWord(RotWord(RotWord(Tmp3)))$$

$$State = Tmp1 + Tmp2 + Tmp3 \quad Tmp4$$

où Xtime est une opération définie comme suit:

$$Xtime\ (state) = ((state\&m2) << 1) + (((state\ \&m1) >> 7) * m3,$$

où state est une rangée de données à traiter par l'opération Xtime, m1 = 0x8080 ... 80, m2 - 0x7f7f ... 7f, m3 = 0x1b, * est l'opération de multiplication dans $GF(2^d)$, + est l'addition modulo 2, & est l'opération AND, « est un décalage à gauche d'un contenu de registre, et » est un décalage à droite d'un contenu de registre,
où Tmp1, Tmp2, Tmp3 et Tmp4 sont un contenu respectivement d'un premier, d'un deuxième, d'un troisième et d'un quatrième registre temporaire, state est un contenu d'un registre de données d'état, et RotWord est une fonction de rotation de mot, et
dans lequel le co-processeur est aménagé pour effectuer au moins des additions, et comporte au moins cinq registres, chacun d'eux ayant une longueur égale ou supérieure au nombre d'unités de données dans la rangée pour les au moins cinq registres comportant des registres comportant le premier, le deuxième, le troisième, le quatrième et le cinquième registre de données d'état.

**19.** Appareil selon la revendication 18, dans lequel le co-processeur (14) est aménagé pour effectuer l'opération de RotWord.

**20.** Appareil selon la revendication 16 ou 17, dans lequel le co-processeur (14) est aménagé pour calculer les fonctions subsidiaires suivantes:

$$Xtime4(state) = ((state\ \&\ m5) << 2) + (((state\ \&\ m4) >> 6) * m3)$$

$$Xtime8(state) = ((state\ \&\ m7) << 3) + (((state\ \&\ m6) >> 5) * m3),$$

où m4 = 0xc0c0 ... c0 (16 octets), m5 = 0x3f3f ... 3f (16 octets), m6 = 0xe0e0 ... e0 (16 octets), m7 = 0x1f1f ... 1f (16 octets), state est une rangée de données à traiter par l'opération Xtime, * est l'opération de multiplication dans $GF(2^d)$, + est l'addition modulo 2, & est l'opération AND, << est un décalage à gauche d'un contenu de registre et >> est un décalage à droite d'un contenu de registre.

**21.** Appareil selon la revendication 20, dans lequel l'appareil comprend par ailleurs un séquenceur de colonnes de mélange inverse destiné à commander les étapes suivantes:

$$Tmp1 - Xtime(state)$$

$$Tmp2 = Xtime4(state)$$

$$Tmp3 = Xtime8(state)$$

$$Tmp4 = Tmp1+Tmp2+Tmp3$$

$$Tmp2 = state+Tmp2+Tmp3$$

$$Tmp1 = state+Tmp1+Tmp3$$

$$Tmp3 = state+tmp3$$

$$Tmp1 = RotWord(Tmp1)$$

$$Tmp2 = RotWord(RotWord(Tmp2))$$

$$Tmp3= RotWord(RotWord(RotWord(Tmp3))$$

$$State = Tmp1 + Tmp2 + Tmp3 + Tmp4,$$

où Tmp1, Tmp2, Tmp3 et Tmp4 sont un contenu respectivement d'un premier, d'un deuxième, d'un troisième et d'un quatrième registre temporaire, state est un contenu d'un registre de données d'état, RotWord est une fonction de rotation de mot, et Xtime est une opération définie comme suit:

$$Xtime\;(state) = ((state\&m2)<< 1) + (((state\;\&m1)>>7)\;*m3,$$

où m1 = 0x8080 ... 80, m2 = 0x7f7f ... 7f, et m3 = 0x1b.

22. Appareil selon la revendication 21, dans lequel la CPU (12) est aménagée pour effectuer les opérations AND.

23. Procédé pour effectuer un algorithme cryptographique comportant une séquence d'étapes, une étape comportant une transformation de colonnes de mélange (208) sur les données d'entrée de colonnes de mélange, pour obtenir des données de sortie de colonnes de mélange, les données d'entrée de colonnes de mélange présentant une rangée de groupes de données, la rangée ayant un nombre prédéterminé de colonnes, une colonne ayant une pluralité de groupes de données, et un groupe de données comportant un nombre d'unités de données, comprenant les étapes suivantes consistant à:

fournir les données d'entrée de colonnes de mélange; et
effectuer au moins une partie de la transformation de colonnes de mélange sur les données d'entrée de colonnes de mélange à l'aide d'une unité arithmétique aménagée pour effectuer en parallèle les calculs pour un nombre d'unités de données, le nombre d'unités de données étant égal ou supérieur au nombre d'unités de données d'une colonne, et
dans lequel le nombre d'unités de données est interprété comme polynôme dans un champ $GF(2^x)$, où x est égal au nombre d'unités de données traitées en parallèle par l'unité arithmétique, où les polynômes ont des coefficients binaires dans GF(2), et dans lequel les unités de données sont interprétées comme coefficients binaires dans GF(2).

**24.** Procédé pour effectuer un décryptage selon un algorithme cryptographique comportant une séquence d'étapes, une étape comportant une transformation de colonnes de mélange inverse sur les données d'entrée de colonnes de mélange inverses, pour obtenir des données de sortie de colonnes de mélange inverses, les données d'entrée de colonnes de mélange inverses présentant une rangée de groupes de données, la rangée ayant un nombre prédéterminé de colonnes, une colonne ayant une pluralité de groupes de données, et un groupe de données comportant un nombre d'unités de données, comprenant les étapes suivantes consistant à:

fournir les données d'entrée de colonnes de mélange inverses; et
effectuer au moins une partie de la transformation de colonnes de mélange inverse sur les données d'entrée de colonnes de mélange inverses à l'aide d'une unité arithmétique aménagée pour effectuer en parallèle les calculs pour un nombre d'unités de données, le nombre d'unités de données étant égal ou supérieur au nombre d'unités de données d'une colonne, et
dans lequel le nombre d'unités de données est interprété comme polynôme dans un champ $GF(2^x)$, où x est égal au nombre d'unités de données traitées en parallèle par l'unité arithmétique, où les polynômes ont des coefficients binaires dans $GF(2)$, et dans lequel les unités de données sont interprétées comme coefficients binaires dans $GF(2)$.

cryptographic apparatus

coprocessor
having
long a. u.
for mix
columns tr.

14

CPU

12

AES algorithm (Rijndael)

10

## FIG 1

200

state bytes in

Byte Substitution — 204

Shift Rows — 206

Mix Columns — 208

Add Round Key — 210

AES Round 202

state bytes out

## FIG 2

300 302 304

input bytes · State array · output bytes

| in$_0$ | in$_4$ | in$_8$ | in$_{12}$ |
|---|---|---|---|
| in$_1$ | in$_5$ | in$_9$ | in$_{13}$ |
| in$_2$ | in$_6$ | in$_{10}$ | in$_{14}$ |
| in$_3$ | in$_7$ | in$_{11}$ | in$_{15}$ |

| S$_{0,0}$ | S$_{0,1}$ | S$_{0,2}$ | S$_{0,3}$ |
|---|---|---|---|
| S$_{1,0}$ | S$_{1,1}$ | S$_{1,2}$ | S$_{1,3}$ |
| S$_{2,0}$ | S$_{2,1}$ | S$_{2,2}$ | S$_{2,3}$ |
| S$_{3,0}$ | S$_{3,1}$ | S$_{3,2}$ | S$_{3,3}$ |

| out$_0$ | out$_4$ | out$_8$ | out$_{12}$ |
|---|---|---|---|
| out$_1$ | out$_5$ | out$_9$ | out$_{13}$ |
| out$_2$ | out$_6$ | out$_{10}$ | out$_{14}$ |
| out$_3$ | out$_7$ | out$_{11}$ | out$_{15}$ |

## FIG 3

$$a(x) = \{03\}x^3 + \{01\}x^2 + \{01\}x + \{02\}$$

## FIG 4a

$$s'(x) = a(x) \otimes s(x):$$

$$
\begin{bmatrix} s_{0,c} \\ s_{1,c} \\ s_{2,c} \\ s_{3,c} \end{bmatrix}
=
\begin{bmatrix} 02 & 03 & 01 & 01 \\ 01 & 02 & 03 & 01 \\ 01 & 01 & 02 & 03 \\ 03 & 01 & 01 & 02 \end{bmatrix}
\begin{bmatrix} s_{0,c} \\ s_{1,c} \\ s_{2,c} \\ s_{3,c} \end{bmatrix}
$$

## FIG 4b

$$s'_{0,c} = (\{02\} \cdot s_{0,c}) \oplus (\{03\}\ s_{1,c}) \oplus s_{2,c} \oplus s_{3,c}$$

$$s'_{1,c} = s_{0,c} \oplus (\{02\} \cdot s_{1,c}) \oplus (\{03\} \cdot s_{2,c}) \oplus s_{3,c}$$

$$s'_{2,c} = s_{0,c} \oplus s_{1,c} \oplus (\{02\} \cdot s_{2,c}) \oplus (\{03\} \cdot s_{3,c})$$

$$s'_{3,c} = (\{03\} \cdot s_{0,c}) \oplus s_{1,c} \oplus s_{2,c} \oplus (\{02\} \cdot s_{3,c}).$$

## FIG 4c

MixColumns ( ) operates on the State column-by-column.

# FIG 5

$Xtime (state) = ((state \& m2) << 1) + (((state \& m1) >> 7) * m3)$

$m1 = 0x8080...80$ (16 bytes)

$m2 = 0x7f7f...7f$ (16 bytes)

$m3 = 0x1b$

" * " is the multipl. operation in GF $(2^{d \geq 128})$,

" + " is the addition modulo 2,

" & " the AND operation

" << " and " >> " are the left and right shift op., respectively

# FIG 6a

601 —— Tmp1 = state & m1
602 —— Tmp1 = Tmp1 >> 7
603 —— Tmp1 = Tmp1 * m3
604 —— Tmp2 = state & m2
605 —— Tmp2 = Tmp2 << 1
606 —— Tmp1 = Tmp1 + Tmp2
= Xtime (state)

# FIG 6b

701 —— Tmp1 = Xtime (state)
702 —— Tmp2 = Tmp1 + state
703 —— Tmp2 = RotWord (Tmp2)
704 —— Tmp1 = Tmp1 + Tmp2
705 —— Tmp2 = RotWord (state)
706 —— Tmp2 = RotWord (Tmp2)
707 —— Tmp1 = Tmp1 + Tmp2
708 —— Tmp2 = Rot Word (Tmp2)
709 —— State = Tmp1 + Tmp2

Fully parallel
MixColumns
Transformation

# FIG 7

801 —— Tmp1 = Xtime (state)
802 —— Tmp2 = Xtime (Tmp1)
803 —— Tmp3 = Xtime (Tmp2)
804 —— Tmp4 = Tmp1 + Tmp2 + Tmp3
805 —— Tmp2 = state + Tmp2 + Tmp3
806 —— Tmp1 = state + Tmp1 + Tmp3
807 —— Tmp3 = state + Tmp3
808 —— Tmp1 = RotWord (Tmp1)
809 —— Tmp2 = RotWord (RotWord(Tmp2))
810 —— Tmp3 = RotWord (RotWord(RotWord(Tmp3)))
811 —— State = Tmp1 + Tmp2 + Tmp3 + Tmp4

Fully parallel
Inverse Mix
Columns
Transformation

# FIG 8

Xtime4 (state) = ((state & m5) << 2) + (((state & m4) >> 6) * m3)
Xtime8 (state) = ((state & m7) << 3) + (((state & m6) >> 5) * m3)

m4 = 0xc0c0...c0 (16bytes),    m5 = 0x3f3f...3f (16bytes)

m6 = 0xe0e0...e0 (16bytes),    m7 = 0x1f1f...1f (16bytes) and m3 = 0x1b

# FIG 9a

901 —— Tmp1 = Xtime (state)
902 —— Tmp2 = Xtime4 (state)
903 —— Tmp3 = Xtime8 (state)
904 —— Tmp4 = Tmp1 + Tmp2 + Tmp3
905 —— Tmp2 = state + Tmp2 + Tmp3
906 —— Tmp1 = state + Tmp1 + Tmp3
907 —— Tmp3 = state + Tmp3
908 —— Tmp1 = RotWord (Tmp1)
909 —— Tmp2 = RotWord (RotWord(Tmp2))
910 —— Tmp3 = RotWord (RotWord(RotWord(Tmp3)))
911 —— State = Tmp1 + Tmp2 + Tmp3 + Tmp4

Fully parallel
Inverse Mix
Columns
Transformation

## FIG 9b

1001 —— Tmp1 = Rcon + SubByte (RotWord(Key))
1002 —— Key = Key + Tmp1
1003 —— Tmp1 = Tmp1 >> 32
1004 —— Key = Key + Tmp1
1005 —— Tmp1 = Tmp1 >> 32
1006 —— Key = Key + Tmp1
1007 —— Tmp1 = Tmp1 >> 32
1008 —— Key = Key + Tmp1

Fully
parallel
Key Expansion

## FIG 10

Fully parallel
Add Round Key

1100 —— State = Key + State

## FIG 11

CPU                                    Coprocessor

1204

| Key (iRAM) | → | AddRoundKey | ← | Data Registers | 1200 |

| SubBytes |
| ShiftRows |

| Key Expansion |          | Mix Columns | 1202 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Advanced Encryption Standard (AES). *National Institute of Standards and Technology (NIST),* 2001
- **SANO, KOIKE ; KAWAMURA, SHIBA.** Performance Evaluation of AES Finalists on the High-End Smart Card. *THIRD AES CANDIDATE CONFERENCE,* 14 April 2000, 82-93
- A 6.7-MFLPOS FLOATING-POINT COPROCESSOR WITH VECTOR/MATRIX INSTRUCTIONS. **TAKASHI NAKAYAMA et al.** IEEE JOURNAL OF SOLID-STATE CIRCUITS. IEEE INC, 01 October 1989, vol. 24, 1324-1330